# EUROPEAN PATENT APPLICATION

(11) **EP 0 660 313 A1**
(43) Date of publication of application: **28.06.1995**
(21) Application number: 94120478.6
(22) Date of filing: 23.12.1994
(51) Int. Cl.: G11B 7/24, G11B 7/26

(54) **Draw optical disk and method for protecting undesirable writing and erasing using the same**

(30) Priority: 27.12.1993 JP 331290/93
(71) Applicant: MINNESOTA MINING AND MANUFACTURING COMPANY, St. Paul, Minnesota 55133-3427 (US)
(72) Inventor: Kobayashi, Mitsuaki, Sumitomo 3M Limited, Tokyo 158 (JP); Takano, Shunsuke, Sumitomo 3M Limited, Tokyo 158 (JP); Muramoto, Akira, Sumitomo 3M Limited, Tokyo 158 (JP); Kamiyama, Koji, Sumitomo 3M Limited, Tokyo 158 (JP)
(74) Representative: Hilleringmann, Jochen, Dipl.-Ing.

(57) **Abstract**

The present invention provides a DRAW optical disk which can impart a protective function against undesirable writing and erasing to a recording membrane itself and changes the function reversibly. This DRAW optical disk has a protective function against undesirable writing and erasing and comprises a substrate and a recording membrane formed thereon, said recording membrane consisting of a photochromic material.

## Description

The present invention relates to a DRAW (Direct Read After Write) optical disk and a method for protecting undesirable writing and erasing using the same.

An optical disk is known as a high density recording medium capable of writing and reading. The optical disks are divided mainly into three types; compact disk which can be only read but not written, DRAW optical disk which can be written once, and erasable optical disk which can be erased and written many times. Further, each type of disk has its characteristic recording methods. For example, the DRAW optical disk has a pit formation method, phase transition method, alloy formation method and bubble formation method.

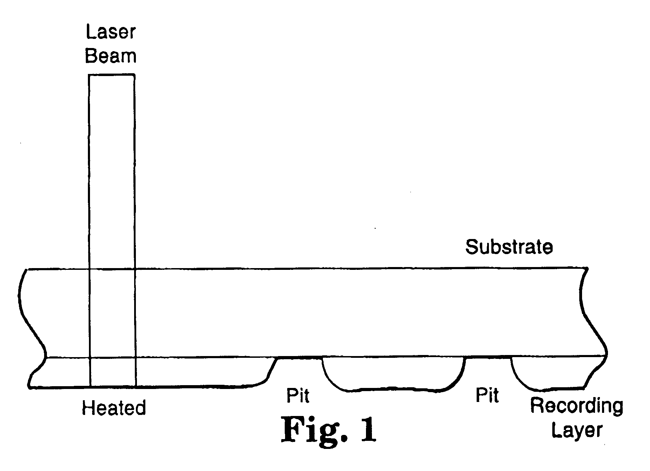

In the case of the pit formation method, data are written as pits on a recording membrane. The pits are formed on the recording membrane when the recording membrane absorbs an exposed laser light and is heated up equal to or above its melting point or sublimation point (see Fig. 1). Reading is conducted by detecting changes in reflectance or absorbence of the recording membrane with a laser light of which intensity is less than that required for writing.

As the recording membrane of this kind of the optical disk, inorganic materials (e.g. Te-Se dye, etc.) and organic materials (e.g. polymethine dye, cyanine dye, etc.) are used. If undesirable writing is conducted in the DRAW optical disk, the previous pits are destroyed. And if a laser light having an intensity more than that required for writing is irradiated during reading by an undesirable and accidental operation of machine and/or operator, the written pits on the recording membrane are destroyed and they cannot be read out any more. Therefore, such undesirable writing can be prevented by imparting a protective function to the optical disk itself, in addition to the optical disk apparatus.

Japanese Patent Kokai Nos. 2-249685 and 3-194737 disclose DRAW optical disks having a protective function against undesirable writing and erasing. In Japanese Patent Kokai No. 2-249685, undesirable writing and erasing are protected by subjecting a recording layer comprising an organic dye to heating or UV exposure after writing to decrease the absorbence of the organic dye which is selected from phtalocyanine derivative and naphthalocyanine derivative. When the absorbence of the recording membrane is once decreased, the dye cannot be restored because of irreversible changes in condition. Therefore, it is impossible to cancel the protective function which had been set on in order to add or erase data.

In Japanese Patent Kokai No. 3-194737, an additional undesirable recording-preventive membrane is provided on the recording membrane of the optical disk and, therefore, the production of the optical disk becomes complicated.

An optical disk comprising a recording membrane incorporating a photochromic material which is provided on a substrate is disclosed in Japanese Patent Kokai Nos. 62-106454, 1-18688 and 2-846, as an erasable optical disk. In the erasable optical disk, writing and erasing is conducted by utilizing a characteristic of the photochromic material wherein a colored state to colorless state is changed into a colorless state reversibly. Therefore, in order to stabilize the colored state as a metastable state, a polymer is formulated into the recording membrane, or a photochromic material is penetrated into a swelled amino polymer. In the case of employing the photochromic material for the erasable optical disk, a stabilizing material is formulated into the recording membrane in addition to the photochromic material, or the photochromic material is penetrated into the polymer. Therefore, the composition on the recording membrane becomes complicated and a problem of dispersibility of the photochromic material into the recording membrane is arisen.

It is the object of the invention to provide a technique for imparting a protective function against undesirable writing and erasing to a recording membrane itself, wherein the function can be set on and off reversibly.

For solving this object the present invention provides a DRAW optical disk having a protective function against undesirable writing and erasing, comprising a substrate and a recording membrane formed thereon, said recording membrane incorporating a photochromic material.

In the present invention, the photochromic material is used for the recording layer. However, the present invention provides a DRAW optical disk and is quite different from the prior art.

Examples of the photochromic material used for the recording membrane include a compound with photochromic property such as spiropyran, fulgide, diallylethene and the like. The stable state of this photochromic material is the colorless state, and it is desired that the wavelength region at which light is absorbed in the colored state includes a wavelength of the laser light.

As the substrate of the DRAW optical disk, plastic (e.g. polymethyl methacrylate, polycarbonate, etc.) or glass is normally used.

The recording membrane is prepared by applying or depositing the photochromic material onto the substrate. The photochromic material may contain various additives, in addition to the compound with photochromic property. Examples of the additive include polymeric materials (i.e. phenoxy, vinyl chloride-vinyl acetate resin copolymer, saran, polyvinyl butyral, polyvinylformal, etc.), plasticizers, antioxidants, stabilizers and the like.

Further, these additives are selected by taking properties, manufacturing process, and manufacturing condition of the recording membrane into consideration. An amount of the additive is preferably 5 to 90 % by weight, more preferably 10 to 50 % by weight.

When the amount is less than 5 % by weight, it is impossible to adjust a solution viscosity to such a degree that the resulting solution can be applied on the substrate. When it exceeds 90 % by weight, a relative amount of the photochromic material is decreased, which results in remarkable deterioration of sensitivity of the recording membrane.

When the amount of the additive is 10 to 50 % by weight, the manufacturing condition is further lightened and a uniform recording membrane can be obtained.

It is preferred to form the photochromic material by depositing or sputtering, in view of its property. It is also possible to apply or laminate the photochromic material on the substrate together with the above additive.

Further, an application or lamination method is not specifically limited, for example, gravure coating, knife coating and the like may be used.

In the present invention, a thickness of the recording membrane is 100 to 10,000 angstrom, preferably 500 to 5,000 angstrom.

When the thickness is less than 100 angstrom, sensitivity of the recording membrane becomes ununiform, and mechanical and chemical strength become inferior. On the other hand, when it exceeds 10,000 angstrom, sensitivity of the recording membrane becomes ununiform and the substrate is liable to be peeled off.

When the thickness of the recording membrane is 500 to 5,000 angstrom, a uniform recording membrane is easily formed.

The DRAW optical disk of the present invention can be optionally provided with a protective membrane or reflective membrane.

The protective membrane is defined as a material layer for protecting the recording membrane mechanically and chemically. For example, there can be used a material such as silicon oxide, silicon carbide and the like.

It is preferred that thickness of the protective layer is 100 to 2,000 angstrom. Particularly, the thickness of 500 to 1,000 angstrom is advantage in view of the formation of the protective layer.

Further, the reflective membrane is defined as a material layer for utilizing a laser light efficiently to write on the recording membrane. It is preferred that the reflective membrane is provided on the surface of the recording membrane, which is opposite to the incident surface of the laser light.

The irradiated laser light reaches the recording membrane, but a part of the light permeates through the recording membrane. The reflective membrane has a function to conduct re-incidence of such light against the recording membrane.

Accordingly, it becomes possible to write with a small dose of the laser light providing the reflective membrane, which results in the protection of the recording membrane and the improvement of recording accuracy.

A thickness of the reflective membrane is decided by taking reflective efficiency and manufacturing condition into consideration. For example, the reflective membrane is prepared from a material such as Al or Al alloy containing Cr and the thickness is preferably 500 to 5,000 angstrom.

When the thickness is less than 500 angstrom, the reflective efficiency is remarkably deteriorated. When it exceeds 5,000 angstrom, it is hard to produce.

A method for protecting undesirable writing of the present invention will be explained below.

In the case of writing, the DRAW optical disk of the present invention is firstly exposed to UV light using a mercury lamp to change the recording membrane into the colored state.

In this state, sensitivity against a laser light is enhanced, which results in an increase of absorbence of the laser light onto the recording membrane.

When the disk is then exposed to the laser light in this state, the recording layer efficiently absorbs the laser light to generate heat. When the temperature of the recording membrane becomes equal to or above its melting point or sublimation point, pits are formed on the recording membrane.

Hereinbelow, the method for protecting undesirable writing and erasing will be described in detail.

After writing, a part or all of the recording membrane is converted back into a colorless state. When exposing the colorless membrane to a laser light having an intensity which is lower than that required for writing, no writing is conducted on the recording membrane.

In this colorless state, sensitivity against the laser light is decreased, which results in remarkable reduction of the absorbence of the laser light onto the recording membrane.

Accordingly, in this state, writing cannot be conducted by the laser light having the intensity at which writing can be conducted at the colored state.

That is, it becomes possible to protect undesirable writing and erasing by changing a part or all of the recording membrane into the colorless state.

As the means for converting into the colorless state, there can be used a xenon lamp and sunlight, in addition to a laser light.

It is also possible to easily change into the colorless state by heating to a predetermined temperature at which no written data is destroyed.

After writing, the recording membrane of the present invention returns to the colorless state by a natural light, e.g., by allowing to stand in a room, which is preferred in the present invention.

The photochromic material used for the recording membrane of the present invention can change from the colored state into the colorless state reversibly. Therefore, the additional writing or erasing can be conducted by changing into the colored state again. That is, the recording membrane is normally maintained at the stable colorless state wherein the protective function against undesirable writing and erasing is provided. Only when writing or erasing is the recording membrane exposed to UV light to change into the colored state.

In the present invention, data are written as pits on the recording membrane incorporating the photochromic material. Further, the present invention does not utilize the fact that the photochromic material changes from the colored state into the colorless state as the erasable optical disk and, therefore, it is not necessary to stabilize each state. Accordingly, the recording membrane can be constructed only from the photochromic material and it is possible to simplify the composition and manufacturing process of the recording membrane.

According to the present invention, the protective function against undesirable writing and erasing can be provided to the recording membrane itself. It is not necessary to stabilize the colored state and colorless state of the photochromic material so that the recording membrane can be constructed only from the photochromic material, which results in simplification of the recording membrane itself as well as structure of the optical disk. It also becomes possible to set on and off the protective function against undesirable writing and readout reversibly. Further, it becomes possible to simplify the construction of the recording membrane and disk structure. Thereby, it becomes possible to provide a cheap optical disk having high reliability and safety. It can also be used for an optical card.

In the following, preferred embodiments of the invention will be described wherein there is shown in
- Fig. 1: a schematic diagram illustrating recording mechanism of a DRAW optical disk,
- Fig. 2: a graph illustrating an absorption spectrum of a deposited spiropyran after exposing to UV light and visible light according to Example 1 and
- Fig. 3: a graph illustrating an absorption spectrum of a dye membrane of Comparative Example 1.

The following Examples further illustrate the present invention in detail but are not to be construed to limit the scope thereof.

### Example 1

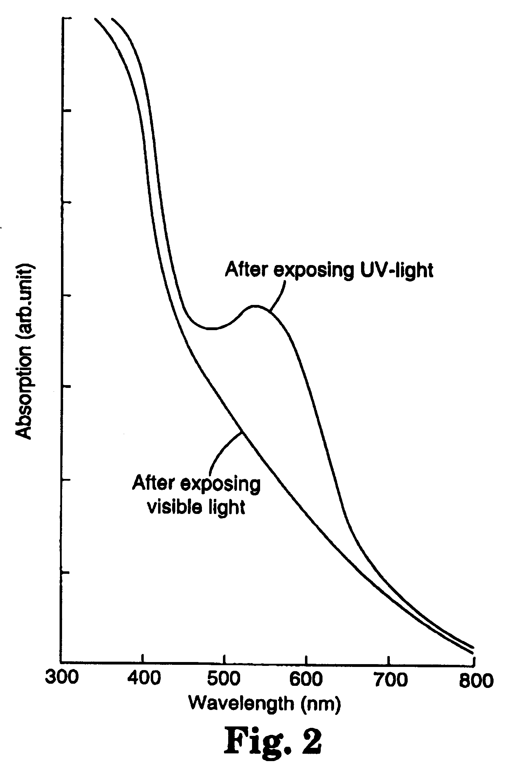

One of spiropyrans, 1,3,3-trimethyl-6'-nitro-spiro [indorine-2,2'-benzopyran] (spiropyran) was used as a material for a recording membrane. It is represented by the chemical formula: 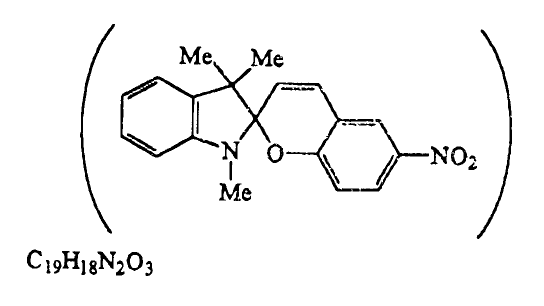
The spiropyran was deposited on a glass substrate at an applied power of about 20 W and a pressure of about 5.0 x 10⁻⁵ Torr by a vacuum deposition method. A thickness of the obtained film is about 1,000 angstrom. Fig. 2 shows an absorption spectrum of the deposited spiropyran at the colored state and colorless state. A 500 W mercury lamp manufactured by Ushio Denki Co. was used to give the colored state and a 500 W xenon lamp manufactured by Ushio Denki Co. was used to give the colorless state. It was clearly observed that the absorbence of the recording layer in the range of 450 to 700 nm at the colored state extremely decreased after changing into the colorless state. The absorption spectrum can be changed reversibly.

The deposited membrane was exposed to a laser light (diameter: 1 µm; intensity: 2 mV; wavelength: 630 nm) while in the colored state it was observed that circular pits having a diameter of about 2 µm were formed. In contrast, it was impossible to write pits on the recording layer according to the same condition when the membrane was in the colorless state.

### Comparative Example 1

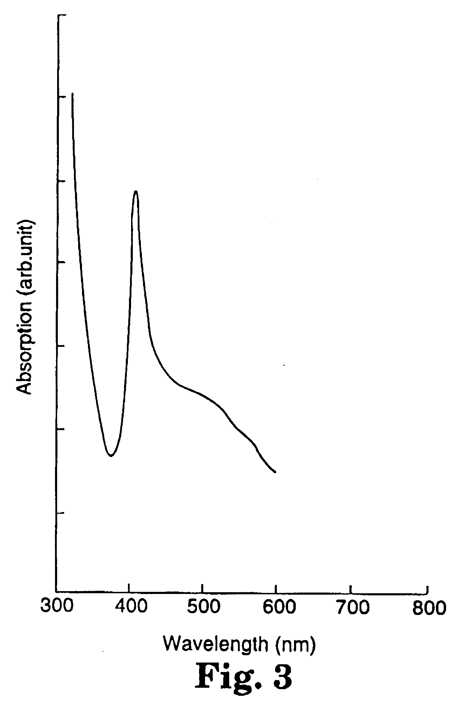

A dye commercially available from Mitsubishi Kasei Co. under HSR-31 was deposited on a glass substrate at an applied power of about 20 W and a pressure of about 3.0 x 10⁻⁵ Torr by a vacuum deposition method. The dye is represented by the chemical formula: 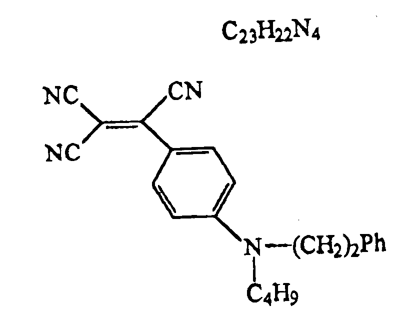
Fig. 3 shows an absorption spectrum of the deposited dye. The absorption spectrum was measured after exposing to a light using a mercury lamp and xenon lamp, respectively. No difference of absorption spectrum was observed between both cases.

## Claims

1. A DRAW optical disk of the type having a recording membrane comprising a photochromic material provided on a substrate, wherein information is stored in the recording membrane in the form of pits, said recording membrane being characterized by:
- a reversible colorless state for reading information stored as pits in the recording membrane,
- a reversible colored state for writing and erasing information stored as pits in the recording membrane, wherein the colored state is more sensitive to an incident laser light than when in the colorless state such that, when the recording membrane in the colored state is exposed to the laser light, pits are reversibly formed in the regions of the membrane which absorb the laser light, and
- wherein the colorless state can be reversibly changed into the colored state by exposing the disk to UV radiation, and the colored state can be reversibly changed to the colorless state by exposing the disk to ambient lighting conditions.

2. The DRAW optical disk according to claim 1, characterized in that said photochromic material is spiropyran, fulgide or diallylethene compound.

3. The DRAW optical disk according to claim 1 or 2, characterized in that a thickness of said recording membrane is 100 to 10,000 angstrom.

4. The DRAW optical disk according to any one of claims 1 to 3, characterized in that a protective membrane is provided on said recording membrane.

5. A method for protecting undesirable writing and erasing, which comprises exposing the DRAW optical disk according to any one of claims 1 to 4 to a laser light to change the recording membrane into the colorless state after writing.
